# EUROPEAN PATENT APPLICATION

(11) **EP 4 800 974 A1**
(43) Date of publication of application: **02.09.2026**
(21) Application number: 24911219.4
(22) Date of filing: 25.12.2024
(51) Int. Cl.: H04L 9/32, H04L 61/5007, H04L 9/08

(54) **IPV6-BASED MULTI-FACTOR AUTHENTICATION ROOT SYSTEM AND METHOD**

(30) Priority: 26.12.2023 CN 202311806973
(71) Applicant: Hu, Jinqian, Hangzhou, Zhejiang 310012 (CN)
(72) Inventor: GUO, Ai, Hangzhou, Zhejiang 310012 (CN); CAI, Xinyi, Hangzhou, Zhejiang 310012 (CN); HU, Jinqian, Hangzhou, Zhejiang 310012 (CN)
(74) Representative: Lucidity IP Ltd
(86) International application number: PCT/CN2024/142250
(87) International publication number: WO 2025/140295

(57) **Abstract**

An IPv6-based multi-factor authentication root system and method are disclosed. The system includes: a first extraction module configured to obtain a number of pieces of identity information, a number of pieces of enterprise information, and an enterprise code of a user; a second extraction module configured to obtain an IPv6 digital address of the user; a third extraction module configured to obtain a number of digital certificates and a number of corresponding keys; an information authentication module configured to perform digital authentication on the identity and enterprise information according to address segments of the IPv6 digital address and generate authenticated information; an electronic seal generation module configured to generate an electronic name seal and an electronic official seal; and a root certificate issuance module configured to perform multi-key verification and issue a number of root certificates when the user issues a request.

## Description

### TECHNICAL FIELD

The present invention relates to the technical field of information security, and specifically relates to a root system and a method.

### BACKGROUND

A root server is a digital trust service facility. However, traditional root servers usually need to adopt international digital certificate authority authentication processes, and often only adopt single-key, single-certificate, and single-platform authentication, which can only be suitable for centralized cloud deployment. There are safety concerns, and it is not convenient for governments, enterprises, families, and individuals.

Therefore, those skilled in the art urgently need to research and develop a root server (i.e., root system) and a method that can effectively solve problems such as safety concerns and inconvenient operation, so as to build an integrated platform from identity credibility, credibility enhancement, and credit investigation to trustworthiness, and realize full life cycle management of digital assets of governments, enterprises, families, and individuals.

It should be noted that the above introduction to the technical background is only for the convenience of clear and complete description of the technical solution of the present invention, and is explained for the convenience of understanding by those skilled in the art. It cannot be considered that the above technical solution is publicly known to those skilled in the art simply because these solutions are explained in the background technology part of the present invention.

### SUMMARY

In order to overcome defects in the prior art, embodiments of the present invention provide an IPv6-based multi-factor authentication root system and method.

An embodiment of the present application discloses an IPv6-based multi-factor authentication root system, comprising: a first extraction module configured to obtain a number of pieces of identity information of a user, a number of pieces of enterprise information, and an enterprise code; a second extraction module configured to obtain an IPv6 digital address of the user, wherein the IPv6 digital address comprises a number of sets of sixteen-bit address segments; a third extraction module configured to obtain a number of digital certificates and a number of corresponding keys provided by a number of digital certificate authorities; an information authentication module configured to perform digital authentication on the number of pieces of identity information and the number of pieces of enterprise information of the user according to the number of sets of sixteen-bit address segments of the IPv6 digital address, and generate a number of pieces of authenticated identity information and a number of pieces of authenticated enterprise information; an electronic name seal/official seal generation module configured to generate an electronic name seal and an electronic official seal of the user according to the number of pieces of authenticated identity information and the number of pieces of authenticated enterprise information; a root certificate issuance module configured to, when the user issues a root certificate issuance request, link the number of digital certificate authorities through the third extraction module, perform multi-key verification on the number of pieces of authenticated identity information and the number of pieces of authenticated enterprise information according to the number of digital certificates and the number of corresponding keys, and issue a number of root certificates.

Further, the electronic name seal is a printed version electronic name seal or a handwritten electronic name seal. Optionally, the electronic name seal further requires a handwritten signature.

Further, the root system further comprises: a binding module configured to bind the enterprise code with the IPv6 digital address, and generate an IPv6-based domain name.

Further, the enterprise code is bound by a fixed telephone number, and the fixed telephone number is a digital application conforming to a global financial security level.

Further, the IPv6-based multi-factor authentication root system is a certificate-secret chain operating system for global and universal digital applications.

Further, the root system further comprises: a stroke digitization module configured to convert each Chinese character in the number of pieces of identity information into a set of digital codes according to a stroke digital code table.

Further, the root system further comprises a multi-module. The multi-module comprises: a central control module, as well as a communication module, an identity authentication module, a key module, and a storage module connected to the central control module; the communication module configured to realize communication between the IPv6-based multi-factor authentication root system and an external server; the identity authentication module configured to perform authentication on biometric data input by the user to generate authenticated biometric data, and authorize the user after the authentication is passed; the key module configured to store a number of keys, and perform encryption on the number of pieces of authenticated identity information and the number of pieces of authenticated enterprise information according to corresponding keys in the number of keys, to generate a number of pieces of encrypted authenticated identity information and a number of pieces of encrypted authenticated enterprise information; the storage module configured to store the authenticated biometric data, the number of pieces of encrypted authenticated identity information, the number of pieces of encrypted authenticated enterprise information, the electronic name seal, the electronic official seal, and the number of root certificates; and the central control module configured to receive input and control operations of other modules, and allow the user to call the electronic name seal and the electronic official seal after the user is authorized.

An embodiment of the present application further discloses an IPv6-based multi-factor root authentication method, the method comprising following steps: providing an IPv6-based multi-factor authentication root system, the IPv6-based multi-factor authentication root system comprising a first extraction module, a second extraction module, a third extraction module, an information authentication module, an electronic name seal/official seal generation module, and a root certificate issuance module; utilizing the first extraction module to obtain a number of pieces of identity information of a user, a number of pieces of enterprise information, and an enterprise code; utilizing the second extraction module to obtain an IPv6 digital address of the user, wherein the IPv6 digital address comprises a number of sets of sixteen-bit address segments; utilizing the third extraction module to obtain a number of digital certificates and a number of corresponding keys provided by a number of digital certificate authorities; utilizing the information authentication module to perform digital authentication on the number of pieces of identity information and the number of pieces of enterprise information of the user according to the number of sets of sixteen-bit address segments of the IPv6 digital address, and generate a number of pieces of authenticated identity information and a number of pieces of authenticated enterprise information; utilizing the electronic name seal/official seal generation module to generate an electronic name seal and an electronic official seal of the user according to the number of pieces of authenticated identity information and the number of pieces of authenticated enterprise information of the user; utilizing the root certificate issuance module to, when the user issues a root certificate issuance request, link the number of digital certificate authorities through the third extraction module, perform multi-key verification on the number of pieces of authenticated identity information and the number of pieces of authenticated enterprise information according to the number of digital certificates and the number of corresponding keys, and issue a number of root certificates.

By means of the above technical solutions, the beneficial effects of the present invention are as follows: compared with the prior art, the advantages of the IPv6-based multi-factor authentication root system and method provided by the present invention include: (1) based on the IPv6 protocol, by concentrating a number of credible factors into certificates with the same security as digital authentication from a digital certificate authority, the system of the present invention can not only realize dual-stack intercommunication of IPv6 and IPv4, but also can realize multi-category mutual intercommunication and mutual recognition of all digital certificate authority digital authentication and national electronic seal authentication; (2) can complete application and issuance of multiple certificates and multiple keys with one authentication on a single platform; can be written into various most secure storage medium devices; (3) through certificate-secret chain management, innovatively complete the authentication and storage of multiple factors and multiple certificates from the initial "birth" of an entity, and establish a distribution operation mode of one primary and multiple secondary, one account and multiple secrets through one number for multiple uses; (4) the digital authentication of the present invention is independent of the international CA authentication system, and is safe and reliable. In addition, the IPv6-based multi-factor authentication root system and method of the present invention can also convert each Chinese character into a set of digital codes D_Code through a stroke digital code table, so as to be computer-readable, and further Sinicize the written code language from the bottom layer, so that the written code language is no longer limited to Western English. In other words, the IPv6-based multi-factor authentication root system of the present invention is a digital trust service facility with China's own intellectual property rights. It is based on a new generation of IPv6 digital address authentication, while taking the intensive global multi-factor authentication of enterprises and individuals as the core, integrating domestic and international digital certificate authority authentication mutual trust services, and forming a solid base for a unified intensive, multi-key, multi-factor enterprise and individual credit system.

In order to make the above and other objects, features, and advantages of the present invention more obvious and easy to understand, preferred embodiments are listed below and described in detail in combination with the accompanying drawings.

### BRIEF DESCRIPTION OF DRAWINGS

In order to more clearly describe the technical solutions in the embodiments of the present invention or the prior art, the drawings required to be used in the description of the embodiments or the prior art will be briefly introduced below. It is obvious that the drawings in the following description are only some embodiments of the present invention. For those of ordinary skill in the art, other drawings can also be obtained based on these drawings without creative labor.
FIG. 1 is a frame diagram of an IPv6-based multi-factor authentication root system in a first embodiment of the present invention.
FIG. 2 is a frame diagram of an IPv6-based multi-factor authentication root system in a second embodiment of the present invention.
FIG. 3 is a frame diagram of an IPv6-based multi-factor authentication root system in a third embodiment of the present invention.
FIG. 4 is a schematic diagram of an embodiment of a stroke digital code table of the present invention.
FIG. 5 is a frame diagram of the multi-module in FIG. 1, FIG. 2, and FIG. 3.
FIG. 6 is a flowchart of an IPv6-based multi-factor root authentication method in a first embodiment of the present invention.
FIG. 7 is a flowchart of an IPv6-based multi-factor root authentication method in a second embodiment of the present invention.

Reference signs of the above drawings:
10A, 10B, 10C IPv6-based multi-factor authentication root system
110 first extraction module
120 second extraction module
130 third extraction module
140 information authentication module
150 electronic name seal/official seal generation module
160 root certificate issuance module
170 binding module
180 stroke digitization module
200 multi-module
30A-30N digital certificate authority
210 central control module
220 communication module
230 identity authentication module
240 key module
250 storage module
ID1-IDn identity information
aID1-aIDn authenticated identity information
eaID1-eaIDn encrypted authenticated identity information
CI1-CIm enterprise information
aCI1-aCIm authenticated enterprise information
eaCI1-eaCIm encrypted authenticated enterprise information
Code_E enterprise code
IPv6_ADD IPv6 digital address
ADD_S1-ADD_Sq sixteen-bit address segments
CAC1-CACp digital certificate
KEY1-KEYp key
EPS electronic name seal
ECS electronic official seal
REQ root certificate issuance request
ROOT_C1-ROOT_Cq root certificate
ROOT_DN domain name
D_Code digital code
BID biometric data
aBID authenticated biometric data
S610-S670, S710-S760 steps

### DETAILED DESCRIPTION OF THE EMBODIMENTS

The technical solutions in the embodiments of the present invention will be clearly and completely described below in combination with the accompanying drawings in the embodiments of the present invention. Obviously, the described embodiments are only a part of the embodiments of the present invention, rather than all the embodiments. Based on the embodiments in the present invention, all other embodiments obtained by those of ordinary skill in the art without creative labor fall within the protection scope of the present invention.

It should be noted that in the description of the present invention, terms such as "first" and "second" are only used for descriptive purposes and to distinguish similar objects, and there is no sequence between the two, nor can it be understood as indicating or implying relative importance. In addition, in the description of the present invention, unless otherwise specified, the meaning of "a number of" is two or more.

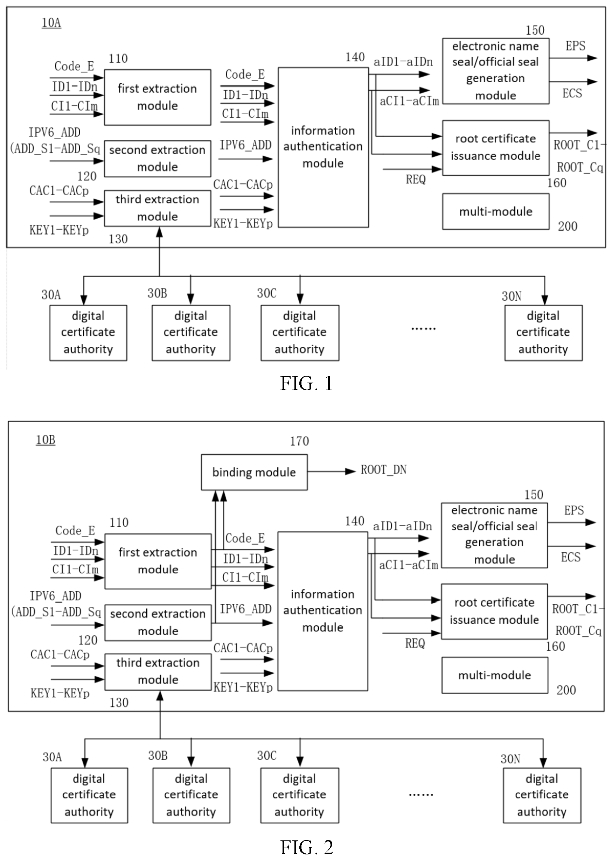

Please refer to FIG. 1. FIG. 1 is a frame diagram of an IPv6-based multi-factor authentication root system 10A in a first embodiment of the present invention. As shown in FIG. 1, the IPv6-based multi-factor authentication root system 10A comprises a first extraction module 110, a second extraction module 120, a third extraction module 130, an information authentication module 140, an electronic name seal/official seal generation module 150, a root certificate issuance module 160, and a multi-module 200. The first extraction module 110 is used to obtain a number of pieces of identity information ID1-IDn, a number of pieces of enterprise information CI1-CIm, and an enterprise code Code_E of a user. The second extraction module 120 is used to obtain an IPv6 digital address IPv6_ADD of the user, wherein the IPv6 digital address IPv6_ADD comprises a number of sets of sixteen-bit address segments ADD_S1-ADD_Sq. The third extraction module 130 is used to obtain a number of digital certificates CAC1-CACp and a number of corresponding keys KEY1-KEYp provided by a number of digital certificate authorities (Certificate Authority) 30A-30N. The information authentication module 140 is coupled to the first extraction module 110, the second extraction module 120, and the third extraction module 130, and is used to perform physical or digital authentication on the number of pieces of identity information ID1-IDn and the number of pieces of enterprise information CI1-CIm of the user according to the number of sets of sixteen-bit address segments ADD_S1-ADD_Sq of the IPv6 digital address IPv6_ADD, and generate a number of pieces of authenticated identity information aID1-aIDn and a number of pieces of authenticated enterprise information aCI1-aCIm. The electronic name seal/official seal generation module 150 is coupled to the information authentication module 140, and is used to generate an electronic name seal EPS and an electronic official seal ECS of the user according to the number of pieces of authenticated identity information aID1-aIDn and the number of pieces of authenticated enterprise information aCI1-aCIm of the user. The root certificate issuance module 160 is coupled to the information authentication module 140, and is used to, when the user issues a root certificate issuance request REQ, link the number of digital certificate authorities 30A-30N through the third extraction module 130, perform multi-key verification on the number of pieces of authenticated identity information aID1-aIDn and the number of pieces of authenticated enterprise information aCI1-aCIm according to the number of digital certificates CAC1-CACp and the number of corresponding keys KEY1-KEYp, and issue a number of root certificates ROOT_C1-ROOT_Cq.

Please note that the number of pieces of identity information ID1-IDn may include the identity card, bank account number, address, email number, bound mobile phone number, bound fixed telephone number, WeChat account, Alipay account, JD account, Pinduoduo account, Weibo number, QQ number, Douyin number, live broadcast room number, and/or video number of the company founder of the user, while the number of pieces of enterprise information CI1-CIm may include the bound fixed telephone number, bound bank account number, electronic business license, tax control information, official seal number, legal person certificate number, unified social credit code, electronic license number, enterprise WeChat number, live broadcast room number, and/or video number authorized to the enterprise user by the bank system and/or government system, etc., but these are only examples, and the present invention is not limited thereto.

The electronic name seal is a printed version electronic name seal or a handwritten electronic name seal. Optionally, the electronic name seal further requires a handwritten signature.

Please note that the enterprise code Code_E is bound by a fixed telephone number, and the fixed telephone number is a digital application conforming to a global financial security level. Therefore, the IPv6-based multi-factor authentication root system 10A/10B/10C of the present invention is a certificate-secret chain operating system for global and universal digital applications.

Please refer to FIG. 2. FIG. 2 is a frame diagram of an IPv6-based multi-factor authentication root system 10B in a second embodiment of the present invention. The structure of the IPv6-based multi-factor authentication root system 10B in FIG. 2 is similar to the structure of the IPv6-based multi-factor authentication root system 10A in FIG. 1, and the difference between the two is that the IPv6-based multi-factor authentication root system 10B in FIG. 2 further comprises a binding module 170, coupled to the first extraction module 110 and the second extraction module 120, and used to bind the enterprise code Code_E with the IPv6 digital address IPv6_ADD, and generate an IPv6-based domain name ROOT_DN.

The IPv6-based domain name ROOT_DN can be a domain name defined based on the IPv6 protocol, for example: ending with the China-based root domain name ".ipv6" to distinguish it from existing overseas-based root domain names such as ".com" and ".net". After binding the enterprise code Code_E with the IPv6 digital address IPv6_ADD, an IPv6-based domain name ROOT_DN can be generated, such as "059188881234.ipv6", "059188881234.cn.ipv6", etc.

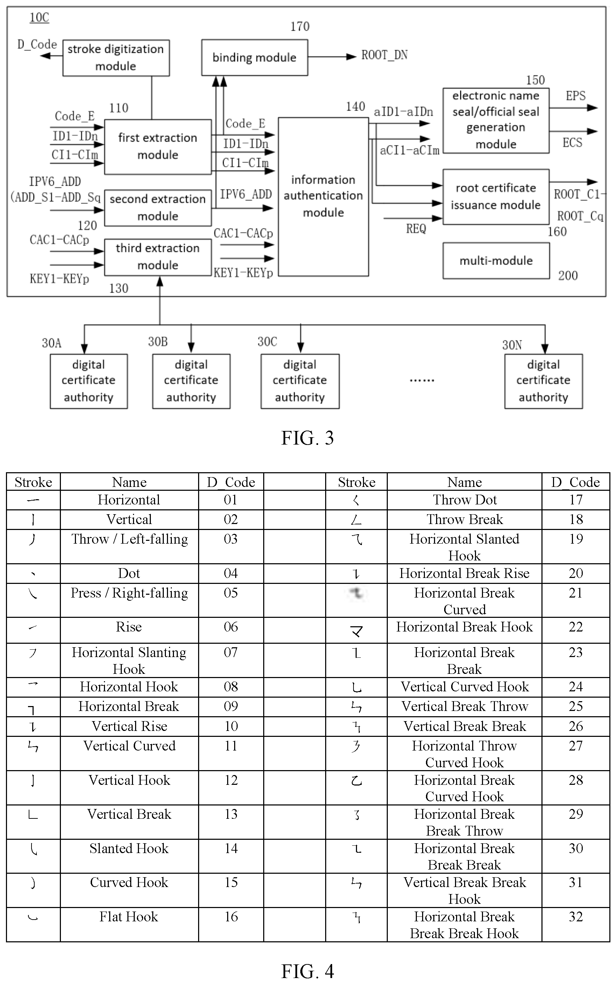

Please refer to FIG. 3. FIG. 3 is a frame diagram of an IPv6-based multi-factor authentication root system 10C in a third embodiment of the present invention. The structure of the IPv6-based multi-factor authentication root system 10C in FIG. 3 is similar to the structure of the IPv6-based multi-factor authentication root system 10B in FIG. 2, and the difference between the two is that the IPv6-based multi-factor authentication root system 10C in FIG. 3 further comprises a stroke digitization module 180, coupled to the first extraction module 110, and used to convert each Chinese character in the number of pieces of identity information ID1-IDn into a set of digital codes D_Code according to a stroke digital code table.

Please refer to FIG. 4. FIG. 4 is a schematic diagram of an embodiment of a stroke digital code table of the present invention. Strokes usually refer to various shapes of dots and lines that make up a Chinese character without interruption, such as horizontal ( 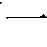 ), vertical ( 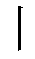 ), left-falling ( 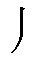 ), dot ( 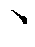 ), right-falling ( 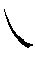 ), etc. A stroke is the smallest continuous writing unit that constitutes a Chinese character shape. FIG. 4 organizes common Chinese character strokes and corresponding digital codes D_Code, which are divided into thirty-two types of strokes in total. For example, the digital code D_Code corresponding to the horizontal stroke ( 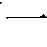 ) is "01", the digital code D_Code corresponding to the vertical stroke ( 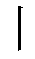 ) is "02", the digital code D_Code corresponding to the left-falling stroke ( 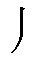 ) is "03", ..., the digital code D_Code corresponding to the horizontal-fold-fold-fold-hook stroke is "32", and so on. In this way, the stroke digitization module 180 can convert each Chinese character in the number of pieces of identity information ID1-IDn into a set of digital codes D_Code according to the stroke digital code table in FIG. 4. For example, identity information includes name information, such as " 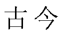 ", wherein " 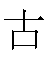 " can be sequentially decomposed into five strokes: horizontal ( 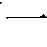 ), left-falling ( 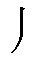 ), vertical ( 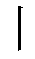 ), horizontal-fold, and horizontal ( 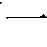 ) according to the writing order. Therefore, the digital code D_Code generated after " 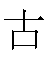 " is converted is (01, 03, 02, 09, 01); " 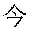 " can be sequentially decomposed into four strokes: left-falling ( 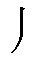 ), right-falling ( 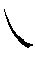 ), dot ( 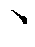 ), and horizontal-left-falling according to the writing order. Therefore, the digital code D_Code generated after " 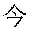 " is converted is (03, 05, 04, 07). And optionally, D_Code can contain a sequence code at the end to distinguish characters with the same strokes and writing order. For example, " 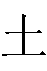 " can be sequentially decomposed into three strokes: horizontal ( 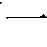 ), vertical ( 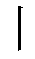 ), and horizontal ( 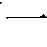 ) according to the writing order. The digital code D_Code generated after " 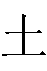 " is converted is (01, 02, 01, 1), and the "1" at the end of the digital code D_Code is a sequence code; " 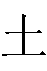 " can be sequentially decomposed into three strokes: horizontal ( 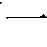 ), vertical ( 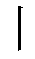 ), and horizontal ( 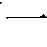 ) according to the writing order. The digital code D_Code generated after " 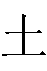 " is converted is (01, 02, 01, 2), and the "2" at the end of the digital code D_Code is a sequence code.

Please note that in specific cases, the above-mentioned third extraction module 130 can also be omitted, and its function can be replaced by the second extraction module 120. In other words, the IPv6-based multi-factor authentication root system 10A/10B/10C of the present invention can utilize the IPv6 digital address IPv6_ADD to replace the digital certificate for authentication, plus the stroke digitization module 180 can convert each Chinese character into a set of digital codes D_Code through the stroke digital code table as shown in FIG. 4, so as to be computer-readable, and further Sinicize the written code language from the bottom layer.

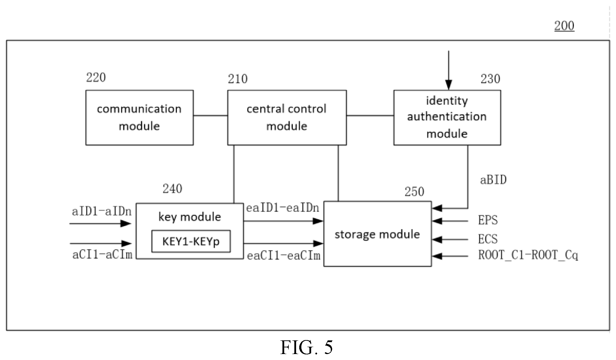

Please refer to FIG. 1 to FIG. 3 and FIG. 5 together. The IPv6-based multi-factor authentication root system 10A/10B/10C in FIG. 1 to FIG. 3 further comprises a multi-module 200. As shown in FIG. 5, the multi-module 200 comprises a central control module 210, as well as a communication module 220, an identity authentication module 230, a key module 240, and a storage module 250 connected to the central control module 210. The communication module 220 is used to realize communication between the IPv6-based multi-factor authentication root system 10A/10B/10C and an external server. The identity authentication module 230 is used to perform authentication on biometric data BID input by the user to generate authenticated biometric data aBID, and authorize the user after the authentication is passed. The key module 240 is used to store a number of keys KEY1-KEYp, and perform encryption on the number of pieces of authenticated identity information aID1-aIDn and the number of pieces of authenticated enterprise information aCI1-aCIm according to corresponding keys in the number of keys KEY1-KEYp, to generate a number of pieces of encrypted authenticated identity information eaID1-eaIDn and a number of pieces of encrypted authenticated enterprise information eaCI1-eaCIm. The storage module 250 is used to store the authenticated biometric data aBID, the number of pieces of encrypted authenticated identity information eaID1-eaIDn, the number of pieces of encrypted authenticated enterprise information eaCI1-eaCIm, the electronic name seal EPS, the electronic official seal ECS, and the number of root certificates ROOT_C1-ROOT_Cq. The central control module 210 is used to receive input and control operations of other modules 220-250, and allow the user to call the electronic name seal EPS and the electronic official seal ECS after the user is authorized.

Generally speaking, the above-mentioned electronic name seal refers to a digital image with a seal and specimen of seal after authorized authentication, and the electronic signature is a handwritten signature on a touch screen, a handwriting tablet, a computer, a tablet, or a mobile phone.

In addition, whether it is Chinese, English, or other languages, the surname and name can be separated into each character (word) of the smallest unit to produce authorized authentication applications. That is to say, in the present invention, a single platform cannot sign a complete name. For example, " 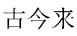 " needs three different platforms to respectively perform authorized authentication applications for " 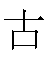 ", " 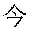 ", and " 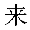 ". And the electronic name seal/electronic signature after authorized authentication also needs to be bound with a mobile phone number and/or an email number for integrated use.

Further, the communication module 220 may include: at least one of a 3G communication module, a 4G communication module, a 5G communication module, a WIFI module, an NBIoT module, a Bluetooth module, an NFC module, and an infrared module; the communication module 220 supports IPv4 and IPv6 protocols.

Please note that the electronic name seal EPS here can be a cross-domain electronic name seal or a cross-domain electronic signature or cover both. The electronic name seal is a printed version electronic name seal or a handwritten electronic name seal. The language of the electronic name seal can be any language in the world, and the corresponding number is the bound mobile phone number. Optionally, the electronic name seal also requires a handwritten electronic signature. The language of the electronic signature can be any language in the world, and the corresponding number is the bound mobile phone number.

Please note that the above-mentioned biometric data BID may include fingerprint information data, palmprint information data, iris information data, facial feature recognition data, voiceprint information data, and/or electrocardiogram data, or any biometric data that can identify the user. In actual applications, one or a combination of them can be used for safety identification. In addition, in the process of using biometric feature data BID for authentication, it is necessary to focus on physiological (Physical) features and behavioral (Behavioral) features. Physiological features include fingerprints, palmprints, palm shapes, irises, faces, voiceprints, DNA, etc., while behavioral features include posture, heartbeat, signatures, etc.

It is worth noting that the IPv6-based multi-factor authentication root system of the present invention is not only an IPv6-based multi-factor authentication root server, but also a Chinese stroke writing application digitization server. On the basis of the IPv6 protocol, by concentrating a number of credible factors into certificates with the same security as digital authentication, the Jizhengtong system of the present invention can not only realize dual-stack intercommunication of IPv6 and IPv4, but also can realize multi-category mutual intercommunication and mutual recognition of all digital authentication and national electronic seal authentication; and the digital authentication of the present invention is independent of the international CA authentication system, and is safe and reliable. In addition, each Chinese character can be converted into a set of digital codes D_Code through the stroke digital code table as shown in FIG. 4, so as to be computer-readable, and further Sinicize the written code language from the bottom layer, so that the written code language is no longer limited to Western English. In other words, the IPv6-based multi-factor authentication root system of the present invention is a digital trust service facility with China's own intellectual property rights. It is based on a new generation of IPv6 digital address authentication, while taking the intensive global multi-factor authentication of enterprises and individuals as the core, integrating domestic and international digital authentication mutual trust services, and forming a solid base for a unified intensive, multi-key, multi-factor enterprise and individual credit system.

Please note again that for any unit or institution other than individuals, the IPv6-based multi-factor authentication root system of the present invention uses a bound fixed telephone number as the unique digital mark, and each element of the data carries the fixed telephone number as an important authentication element; while for individuals and families, the IPv6-based multi-factor authentication root system of the present invention needs to match and bind real-name authenticated mobile phone numbers.

The IPv6-based multi-factor authentication root system of the present invention can be a trustworthy authentication server system, or a third-party authentication platform system. This terminal device includes authentication, storage, management, and application of various certificate keys such as electronic seals. It corresponds to any department or platform system of social economic transactions, including governments, enterprises, individuals, and families.

The IPv6-based multi-factor authentication root system of the present invention can be realized by a chip of an integrated physical-electronic intelligent electronic seal. The chip of the integrated physical-electronic intelligent electronic seal stores various certificates and keys, and all certificates and keys can be remotely distributed, downloaded, stored, and applied.

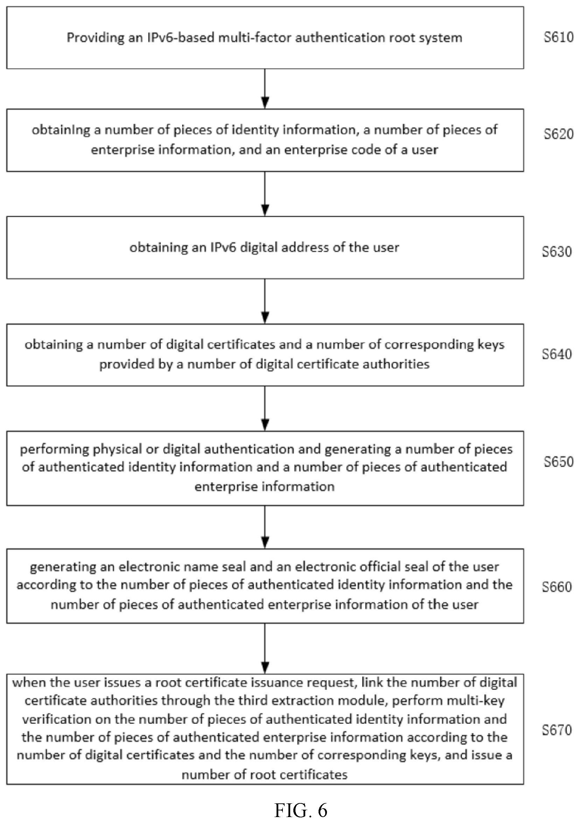

Please refer to FIG. 1 and FIG. 6 together. FIG. 6 is a flowchart of an IPv6-based multi-factor root authentication method in a first embodiment of the present invention. The IPv6-based multi-factor root authentication method in FIG. 6 comprises following steps:
Step S610: Providing an IPv6-based multi-factor authentication root system, the IPv6-based multi-factor authentication root system comprising a first extraction module, a second extraction module, a third extraction module, an information authentication module, an electronic name seal/official seal generation module, and a root certificate issuance module;
Step S620: Utilizing the first extraction module to obtain a number of pieces of identity information, a number of pieces of enterprise information, and an enterprise code of a user;
Step S630: Utilizing the second extraction module to obtain an IPv6 digital address of the user, wherein the IPv6 digital address comprises a number of sets of sixteen-bit address segments;
Step S640: Utilizing the third extraction module to obtain a number of digital certificates and a number of corresponding keys provided by a number of digital certificate authorities;
Step S650: Utilizing the information authentication module to perform physical or digital authentication on the number of pieces of identity information and the number of pieces of enterprise information of the user according to the number of sets of sixteen-bit address segments of the IPv6 digital address, and generate a number of pieces of authenticated identity information and a number of pieces of authenticated enterprise information;
Step S660: Utilizing the electronic name seal/official seal generation module to generate an electronic name seal and an electronic official seal of the user according to the number of pieces of authenticated identity information and the number of pieces of authenticated enterprise information of the user;
Step S670: Utilizing the root certificate issuance module to, when the user issues a root certificate issuance request, link the number of digital certificate authorities through the third extraction module, perform multi-key verification on the number of pieces of authenticated identity information and the number of pieces of authenticated enterprise information according to the number of digital certificates and the number of corresponding keys, and issue a number of root certificates.

Please note that step S620 is executed by the first extraction module 110, step S630 is executed by the second extraction module 120, step S640 is executed by the third extraction module 130, step S650 is executed by the information authentication module 140, step S660 is executed by the electronic name seal/official seal generation module 150, and step S670 is executed by the root certificate issuance module 160.

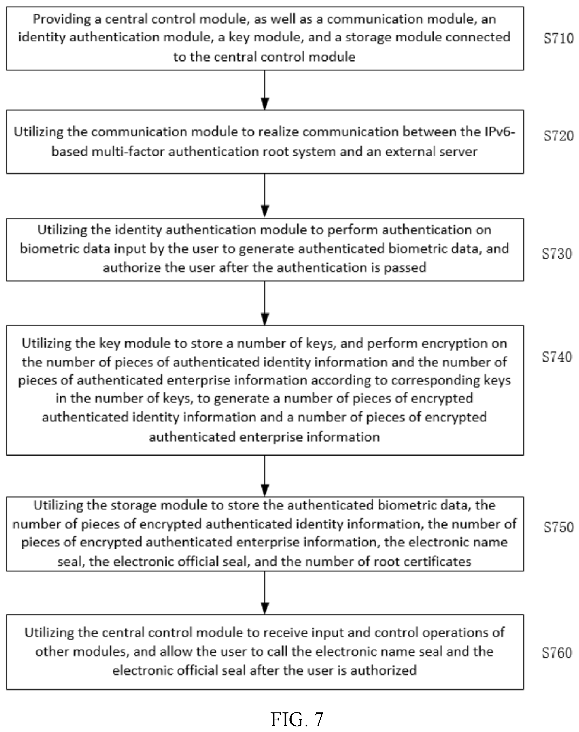

Please refer to FIG. 5 and FIG. 7 together. FIG. 7 is a flowchart of an IPv6-based multi-factor root authentication method in a second embodiment of the present invention. The IPv6-based multi-factor root authentication method in FIG. 7 comprises following steps:
Step S710: Providing a central control module, as well as a communication module, an identity authentication module, a key module, and a storage module connected to the central control module;
Step S720: Utilizing the communication module to realize communication between the IPv6-based multi-factor authentication root system and an external server;
Step S730: Utilizing the identity authentication module to perform authentication on biometric data input by the user to generate authenticated biometric data, and authorize the user after the authentication is passed;
Step S740: Utilizing the key module to store a number of keys, and perform encryption on the number of pieces of authenticated identity information and the number of pieces of authenticated enterprise information according to corresponding keys in the number of keys, to generate a number of pieces of encrypted authenticated identity information and a number of pieces of encrypted authenticated enterprise information;
Step S750: Utilizing the storage module to store the authenticated biometric data, the number of pieces of encrypted authenticated identity information, the number of pieces of encrypted authenticated enterprise information, the electronic name seal, the electronic official seal, and the number of root certificates; and
Step S760: Utilizing the central control module to receive input and control operations of other modules, and allow the user to call the electronic name seal and the electronic official seal after the user is authorized.

Please note that step S720 is executed by the communication module 220, step S730 is executed by the identity authentication module 230, step S740 is executed by the key module 240, step S750 is executed by the storage module 250, and step S760 is executed by the central control module 210.

A specific embodiment of the present invention provides an IPv6-based multi-factor authentication root system and method, which can issue root certificates with multiple certificates, multiple keys, multiple factors, and multiple platforms. Therefore, compared with the traditional root system which only supports a single certificate, a single key, a single factor, and a single platform, the present invention can effectively solve problems such as safety concerns and inconvenient operation. Furthermore, the IPv6-based multi-factor authentication root system of the present invention uses integrated physical-electronic applications for privatization deployment, and each intelligent terminal is an edge cloud integrating computing power and storage. Intelligent terminals include Jizhengtong credit investigation servers, intelligent seals, Jizhengtong set-top boxes, Jizhengtong routers, Jizhengtong U-shields, etc., so it can solve the problem of unsafe centralized deployment of private keys. In addition, the IPv6-based multi-factor authentication root system of the present invention binds a fixed telephone number and/or a mobile phone number, which can realize one number for multiple uses to expand digital space, build an integrated platform from identity credibility, credibility enhancement, and credit investigation to trustworthiness, and realize full life cycle management of digital assets of governments, enterprises, families, and individuals.

The above-mentioned embodiments of the present invention can be implemented in various hardware, software coding, or a combination of both. For example, the embodiments of the present invention can also be program codes executed in a Digital Signal Processor (DSP) to perform the above methods. The present invention can also involve a variety of functions executed by computer processors, digital signal processors, microprocessors, or Field Programmable Gate Arrays (FPGA). The above processors can be configured to perform specific tasks according to the present invention, which is accomplished by executing machine-readable software codes or firmware codes defining the specific methods disclosed in the present invention. Software codes or firmware codes can be developed into different programming languages and different formats or forms. Software codes can also be compiled for different target platforms. However, different code styles, types, and languages of software codes and other types of configuration codes performing tasks according to the present invention do not deviate from the spirit and scope of the present invention.

By means of the above technical solutions, the beneficial effects of the present invention are as follows: compared with the prior art, the advantages of the IPv6-based multi-factor authentication root system and method provided by the present invention include: (1) based on the IPv6 protocol, by concentrating a number of credible factors into certificates with the same security as digital authentication, the system of the present invention can not only realize dual-stack intercommunication of IPv6 and IPv4, but also can realize multi-category mutual intercommunication and mutual recognition of all digital authentication and national electronic seal authentication; (2) can complete application and issuance of multiple certificates and multiple keys with one authentication on a single platform; can be written into various most secure storage medium devices; (3) through certificate-secret chain management, innovatively complete the authentication and storage of multiple factors and multiple certificates from the initial "birth" of an entity, and establish a distribution operation mode of one primary and multiple secondary, one account and multiple secrets through one number for multiple uses; (4) the digital authentication of the present invention is independent of the international CA authentication system, and is safe and reliable. In addition, the IPv6-based multi-factor authentication root system and method of the present invention can also convert each Chinese character into a set of digital codes D_Code through a stroke digital code table, so as to be computer-readable, and further Sinicize the written code language from the bottom layer, so that the written code language is no longer limited to Western English. In other words, the IPv6-based multi-factor authentication root system of the present invention is a digital trust service facility with China's own intellectual property rights. It is based on a new generation of IPv6 digital address authentication, while taking the intensive global multi-factor authentication of enterprises and individuals as the core, integrating domestic and international digital certificate authority authentication mutual trust services, and forming a solid base for a unified intensive, multi-key, multi-factor enterprise and individual credit system.

Specific embodiments are used in the present invention to explain the principles and implementation modes of the present invention. The description of the above embodiments is only used to help understand the method and core idea of the present invention. At the same time, for those of ordinary skill in the art, there will be changes in the specific implementation modes and application scope based on the idea of the present invention. In summary, the contents of this specification should not be understood as a limitation on the present invention.

## Claims

1. An IPv6-based multi-factor authentication root system, comprising:
a first extraction module configured to obtain a number of pieces of identity information of a user, a number of pieces of enterprise information, and an enterprise code;
a second extraction module configured to obtain an IPv6 digital address of the user, wherein the IPv6 digital address comprises a number of sets of sixteen-bit address segments;
a third extraction module configured to obtain a number of digital certificates and a number of corresponding keys provided by a number of digital certificate authorities;
an information authentication module, coupled to the first extraction module, the second extraction module, and the third extraction module, and configured to perform physical or digital authentication on the number of pieces of identity information and the number of pieces of enterprise information of the user according to the number of sets of sixteen-bit address segments of the IPv6 digital address, and generate a number of pieces of authenticated identity information and a number of pieces of authenticated enterprise information;
an electronic name seal/official seal generation module, coupled to the information authentication module, and configured to generate an electronic name seal and an electronic official seal of the user according to the number of pieces of authenticated identity information and the number of pieces of authenticated enterprise information; and
a root certificate issuance module, coupled to the information authentication module, and configured to, when the user issues a root certificate issuance request, link the number of digital certificate authorities through the third extraction module, perform multi-key verification on the number of pieces of authenticated identity information and the number of pieces of authenticated enterprise information according to the number of digital certificates and the number of corresponding keys, and issue a number of root certificates.

2. The IPv6-based multi-factor authentication root system according to claim 1, further comprising:
a binding module, coupled to the first extraction module and the second extraction module, and configured to bind the enterprise code with the IPv6 digital address, and generate an IPv6-based domain name.

3. The IPv6-based multi-factor authentication root system according to claim 1, further comprising:
a stroke digitization module, coupled to the first extraction module, and configured to convert each Chinese character in the number of pieces of identity information into a set of digital codes according to a stroke digital code table.

4. The IPv6-based multi-factor authentication root system according to claim 1, further comprising a multi-module, coupled to the root certificate issuance module, the multi-module comprising: a central control module, as well as a communication module, an identity authentication module, a key module, and a storage module connected to the central control module;
the communication module configured to realize communication between the IPv6-based multi-factor authentication root system and an external server;
the identity authentication module configured to perform authentication on biometric data input by the user to generate authenticated biometric data, and authorize the user after the authentication is passed;
the key module configured to store the number of keys, and perform encryption on the number of pieces of authenticated identity information and the number of pieces of authenticated enterprise information according to corresponding keys in the number of keys, to generate a number of pieces of encrypted authenticated identity information and a number of pieces of encrypted authenticated enterprise information;
the storage module configured to store the authenticated biometric data, the number of pieces of encrypted authenticated identity information, the number of pieces of encrypted authenticated enterprise information, the electronic name seal, the electronic official seal, and the number of root certificates; and
the central control module configured to receive input and control operations of other modules, and allow the user to call the electronic name seal and the electronic official seal after the user is authorized.

5. The IPv6-based multi-factor authentication root system according to claim 1, **characterized in that**: the enterprise code is bound by a fixed telephone number, and the fixed telephone number is a digital application conforming to a global financial security level.

6. The IPv6-based multi-factor authentication root system according to claim 1, **characterized in that**: the IPv6-based multi-factor authentication root system is a certificate-secret chain operating system for global and universal digital applications.

7. The IPv6-based multi-factor authentication root system according to claim 1, **characterized in that**: the electronic name seal further requires a handwritten signature when sealing.

8. An IPv6-based multi-factor root authentication method, applied to an IPv6-based multi-factor authentication root system, comprising following steps:
providing the IPv6-based multi-factor authentication root system, the IPv6-based multi-factor authentication root system comprising a first extraction module, a second extraction module, a third extraction module, an information authentication module, an electronic name seal/official seal generation module, and a root certificate issuance module;
utilizing the first extraction module to obtain a number of pieces of identity information of a user, a number of pieces of enterprise information, and an enterprise code;
utilizing the second extraction module to obtain an IPv6 digital address of the user, wherein the IPv6 digital address comprises a number of sets of sixteen-bit address segments;
utilizing the third extraction module to obtain a number of digital certificates and a number of corresponding keys provided by a number of digital certificate authorities;
utilizing the information authentication module to perform physical or digital authentication on the number of pieces of identity information and the number of pieces of enterprise information of the user according to the number of sets of sixteen-bit address segments of the IPv6 digital address, and generate a number of pieces of authenticated identity information and a number of pieces of authenticated enterprise information;
utilizing the electronic name seal/official seal generation module to generate an electronic name seal and an electronic official seal of the user according to the number of pieces of authenticated identity information and the number of pieces of authenticated enterprise information of the user; and
utilizing the root certificate issuance module to, when the user issues a root certificate issuance request, link the number of digital certificate authorities through the third extraction module, perform multi-key verification on the number of pieces of authenticated identity information and the number of pieces of authenticated enterprise information according to the number of digital certificates and the number of corresponding keys, and issue a number of root certificates.

9. The IPv6-based multi-factor root authentication method according to claim 8, further comprising following steps:
the IPv6-based multi-factor authentication root system further comprising a binding module; and
utilizing the binding module to bind the enterprise code with the IPv6 digital address, and generate an IPv6-based domain name.

10. The IPv6-based multi-factor root authentication method according to claim 8, further comprising following steps:
the IPv6-based multi-factor authentication root system further comprising a stroke digitization module; and
utilizing the stroke digitization module to convert each Chinese character in the number of pieces of identity information into a set of digital codes according to a stroke digital code table.

11. The IPv6-based multi-factor root authentication method according to claim 8, further comprising following steps:
providing a central control module, as well as a communication module, an identity authentication module, a key module, and a storage module connected to the central control module;
utilizing the communication module to realize communication between the IPv6-based multi-factor authentication root system and an external server;
utilizing the identity authentication module to perform authentication on biometric data input by the user to generate authenticated biometric data, and authorize the user after the authentication is passed;
utilizing the key module to store the number of keys, and perform encryption on the number of pieces of authenticated identity information and the number of pieces of authenticated enterprise information according to corresponding keys in the number of keys, to generate a number of pieces of encrypted authenticated identity information and a number of pieces of encrypted authenticated enterprise information;
utilizing the storage module to store the authenticated biometric data, the number of pieces of encrypted authenticated identity information, the number of pieces of encrypted authenticated enterprise information, the electronic name seal, the electronic official seal, and the number of root certificates; and
utilizing the central control module to receive input and control operations of other modules, and allow the user to call the electronic name seal and the electronic official seal after the user is authorized.
